(19) Europäisches Patentamt
European Patent Office
Office européen des brevets

(11) **EP 2 411 787 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **10713123.7**

(22) Anmeldetag: **23.03.2010**

(51) Int Cl.:
***G01N 15/02*** *(2006.01)*

(86) Internationale Anmeldenummer:
**PCT/EP2010/001798**

(87) Internationale Veröffentlichungsnummer:
**WO 2010/108648 (30.09.2010 Gazette 2010/39)**

(54) **VORRICHTUNG ZUM BESTIMMEN VON PARTIKELNGRÖSSEN**

APPARATUS FOR DETERMINING PARTICLE SIZES

DISPOSITIF POUR DÉTERMINER LA GRANULOMÉTRIE DE PARTICULES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.03.2009 DE 102009014080**

(43) Veröffentlichungstag der Anmeldung:
**01.02.2012 Patentblatt 2012/05**

(73) Patentinhaber: **Baumer Optronic GmbH**
**01454 Radeberg (DE)**

(72) Erfinder:
• **IHLEFELD, Joachim**
**01067 Dresden (DE)**
• **TARRAF, Amer**
**CH-8280 Kreuzlingen (CH)**

(74) Vertreter: **Strauss, Steffen**
**Baumer Innotec AG**
**Hummelstrasse 17**
**Group Intellectual Property**
**8501 Frauenfeld (CH)**

(56) Entgegenhaltungen:
WO-A1-02/37083     GB-A- 2 203 542
JP-A- 2003 057 164     JP-A- 2006 170 910
US-A- 6 061 130     US-A1- 2004 189 991
US-A1- 2008 231 854     US-B1- 6 525 325

EP 2 411 787 B1

**Beschreibung**

Die Erfindung betrifft allgemein die Bestimmung von Partikelgrössen. Insbesondere betrifft die Erfindung die Bestimmung der Grössen von Partikeln eines Partikelstroms.

Aus der GB 2 203 542 A ist eine Anordnung zur Messung von Partikelgrössenverteilungen bekannt. Die Messung der Partikelgrössen eines Partikelstroms niedriger Konzentration erfolgt durch Vorwärts-Lichtstreuung anhand aufgezeichneter Fraunhofer-Beugungsmuster. Für das Verfahren wird eine hochintensive Lichtquelle, wie etwa ein gepulster Galliumarsenid-Laser benötigt. Aufgrund der hochintensiven Lichtquelle wird ein Blocker verwendet, um das nicht gestreute oder in Vorwärtsrichtung gestreute Licht abzublocken.

Diese spezielle Anordnung soll die Detektion sehr kleiner Partikel mit Grössen kleiner als 1 Mikrometer Durchmesser auch bei niedrigen Konzentrationen ermöglichen.

Derartige Partikel haben Grössen von der Grössenordnung der Wellenlänge des verwendeten Lichts. Werden die Partikel deutlich grösser als die Lichtwellenlänge, kann eine Auswertung des Beugungsmusters jedoch schnell zu Missinterpretationen führen, besonders wenn der Partikel eine von der Kugelform deutlich abwelchende Gestalt hat. Das Beugungsmuster wird dann komplexer, was unter anderem dann von einer Intensitätsverteilung aus einer Überlagerung mehrerer separater Partikel nicht eindeutig zu diskriminieren ist.

Zudem besteht das Problem, dass eine Beugungsmessung nicht in der Lage ist, agglomerierte kleine Partikel von einem einzelnen, grösseren Partikel zu unterscheiden.

Da das in GB 2 203 542 A beschriebene Verfahren nicht gut für grosse Partikel geeignet ist, besteht das Problem, sehr breite Grössenverteilungen korrekt zu erfassen.

Die US 2008/231854A1 zeigt eine Vorrichtung zur Bestimmung von Partikelgrösse und/oder Partikelform eines Partikelgemisches, mit einer Zuführeinrichtung, die das Partikelgemisch als Partikelstrom durch eine Messzone führt, einem Beleuchtungsmodul zur Beleuchtung einer Messzone, einem Detektionsmodul mit zwei Kameras, die jeweils einen der entsprechenden Kamera zugeordneten Bereich der Messzone aufnehmen, wobei die Kameras die Bereiche mit unterschiedlichen Vergrößerungen aufnehmen. Mit einem Auswertemodul wird anhand der Aufnahmen der Kameras die Partikelgrösse und/oder Partikelform bestimmt. Hierbei werden die beiden Messbereiche mit unterschiedlichen Intensitäten beleuchtet.

Die US 6 061 130 A zeigt eine Vorrichtung zur Bestimmung der Partikelgrössenverteilung und zur Charakterisierung der Partikelformen eines Partikelgemisches durch elektrooptische Abtastung. Hierbei besteht die Bilderfassungseinrichtung aus einer Mehrzahl von auf einen Partikelstrom ausgerichteten elektrooptischen Bildaufzeichnungsgeräten. Die Bildaufzeichnungsgeräte weisen dabei unterschiedliche, zur Abdeckung des gesamten Meßbereichs der Vorrichtung aufeinander abgestimmte Abbildungsmaßstäbe auf. Je größer beispielsweise die zu vermessenden Partikeln in der zu untersuchenden Kornverteilung in dem Partikelstrom sind, desto mehr Bildpunkte werden von ihnen beim Durchgang durch die Bilderfassungsfläche der Bildaufzeichnungsgeräte abgedeckt. Da im Rahmen der rechnergestützten Auswertung alle diejenigen Partikel unberücksichtigt bleiben, welche die Bilderfassungsfläche auch nur teilweise überschreiten, nimmt bei der Untersuchung entsprechender Komverteilungen die Wahrscheinlichkeit zu, dass grössere Partikel signifikant unterrepräsentativ erfasst werden. Hinzu kommt, dass größere und schwerere Partikel eine höhere Fallgeschwindigkeit annehmen, so dass je nach Belichtungszeit die Gefahr eines Verschmierens der aufgenommenen Projektionsfläche besteht.

Der Erfindung liegt daher die Aufgabe zugrunde, ebenfalls optisch die Erfassung der Grössen von Partikel innerhalb eines grossen Messbereichs zu ermöglichen, wobei die Partikelgrössen um mehrere Grössenordnungen voneinander abweichen können.

Diese Aufgabe wird durch den Gegenstand der unabhängigen Ansprüche gelost Vorteilhafte Ausgestaltungen und Weiterbildungen sind in den abhängigen Ansprüchen angegeben.

Demgemäß sieht die Erfindung eine Vorrichtung zur Bestimmung von Partikelgrössen von Partikelströmen vor, die durch ein ein Messvolumen strömen und ein das Meßvolumen erfassende optische Messanordnung und eine an die optische Messanordnung angeschlossene Recheneinrichtung, wobei die optische Messanordnung ein erstes, vorzugsweise telezentrisches, optisches Messsystem mit einem ersten Matrix-Sensor und einer Beleuchtung umfasst, wobei die Beleuchtung das Messvolumen durchleuchtet und der erste Matrix-Sensor und die Beleuchtung eine Durchlicht-Anordnung bilden, und wobei die Recheneinrichtung eingerichtet ist, aus den Bilddaten des ersten Matrix-Sensors Projektionsflächen von Partikeln innerhalb des durchleuchteten Messvolumens zu bestimmen, und wobei die optische Messanordnung ein zweites optisches Messsystem mit einem zweiten Matrix-Sensor zur Erfassung des Beugungsmusters der Partikel umfasst, und wobei die Recheneinrichtung eingerichtet ist, anhand der Projektionsflächen und des Beugungsmusters eine Grössenverteilung der Partikel im Messvolumen zu bestimmen, wobei die Recheneinrichtung eingerichtet ist, die Grössenverteilung aus anhand der Projektionsflächen bestimmten Partikelgrössen einerseits und anhand des Beugungsmusters bestimmten Partikelgrössen andererseits zu bilden, insbesondere auch eine gemeinsame Verteilung aus den beiden Verteilungen zusammenzusetzen.

Ein entsprechendes Verfahren zur Bestimmung von Partikelgrössenverteilungen von Partikelströmen, insbesondere mittels einer erfindungsgemäßen Vorrichtung basiert demgemäß darauf, dass mittels eines ersten, vorzugsweise telezentrischen, optischen Messsystems mit einer Beleuchtung ein Messvolumen durchleuchtet und das Durchlicht-Signal von einem ersten Matrix-Sensor des ersten optischen Meßsystems erfasst wird, wobei anhand des Durchlicht-Signals Projektionsflächen von Partikeln mittels einer Recheneinrichtung bestimmt werden, und wobei mittels eines zweiten Matrix-Sensore eines zweiten optischen Meßsystems der optischen Messanordnung ein Beugungsmusters der Partikel erfasst wird, wobei mittels der Recheneinrichtung die Grössenverteilung aus anhand der Projektionsflächen bestimmten Partikelgrössen einerseits und anhand des Beugungsmusters bestimmten Partikelgrössen andererseits gebildet wird. Zur Bestimmung der Projektionsflächen von Partikeln werden in Weiterbildung der Erfindung Konturpunkte bestimmt und anschließend zu Konturen segmentiert, beziehungsweise zu Konturen verbunden. Um einen Partikel zu erkennen und dessen Projektionsfläche zu bestimmen, können dazu Kontursegmente gesucht werden, die geschlossene Umrandungskurven ergeben. Anhand dieser Kurven kann dann der Innenbereich der Kurve ermittelt werden, welcher die Projektionsfläche des zugehörigen Partikels repräsentiert. Das Erkennen des Innenbereichs kann sehr einfach beispielsweise anhand der Bildhelligkeitswerte bestimmt werden, da in einer Durchlichtaufnahme der Innenbereich typischerweise dunkler ist als die Umgebung. Die Bestimmung der Konturpunkte anhand des Grauwertverlaufs über den Rand der Projektionsfläche eines Partikels kann mit Subpixel-Genauigkeit erfolgen, wenn mehrere Punkte in die Berechnung des Konturpunktorts mit einbezogen werden.

Um eine zusammenhängende Größenverteilung über einen weiten Bereich zu erhalten, kann von der Recheneinrichtung die anhand des Beugungsmusters bestimmte Grössenverteilung mittels eines mit dieser Grössenverteilung überlappenden Bereichs der anderen, anhand der Projektionsflächen bestimmten Grössenverteilung kalibriert, beziehungsweise auf diese skaliert werden. Demgemäß ist es allgemein günstig, wenn die Messbereiche der beiden optischen Meßsysteme teilweise überlappen, wobei der Überlapp sinnvollerweise im Bereich kleiner Partikelgrössen der durch Flächenprojektion gewonnenen Verteilung und im Bereich großer Partikelgrössen der anhand des Beugungsmusters ermittelten weiteren Verteilung liegt.

Das Meßvolumen ist in bevorzugter Weiterbildung der Erfindung ein von dem zu analysierenden Partikelstrom durchströmtes Rohr. Dieses kann transparent sein oder Fensterbereiche aufweisen, um das Licht für die Messungen hindurchzulassen.

Es wird also eine für größere Partikel gut geeignete Messung von Projektionsflächen mit einer für kleine Partikel gut geeigneten Vermessung von Beugungsmustern kombiniert.

Die beiden Grössenmessbereiche der optischen Meßsysteme können anhand vorbestimmter Flächenschwellwerte für die den Partikel zuordenbaren Projektionsflächen aufgeteilt sein. Schwellwerte, welche die Messbereiche aufteilen, können auch auf andere Weise definiert werden. Jedenfalls können die Schwellwerte bestimmten Grössen von Projektionsflächen zugeordnet werden.

Gemäß einem weiteren Aspekt der Erfindung ist eine Vorrichtung zur Bestimmung von Partikelgrössen für die Analyse von Partikelströmen in einem transparenten Messvolumen vorgesehen, wobei vorzugsweise das geometrische Maß der kleinsten zu messenden Partikel kleiner oder gleich dem durch die größten zu messenden Partikel bestimmten Tiefenschärfebereich eines optischen Meßsystems ist, und wobei mit einem ersten telezentrischen optischen Meßsystem zu diskreten Zeitpunkten innerhalb eines Messbereichs Projektionsflächen von Partikeln ab einen ersten Flächenschwellwert und/oder Kontrastschwellwert erfasst werden und einem zweiten, diffraktiven optischen Meßsystem innerhalb eines Zeitfensters integrale Spektren unterhalb eines zweiten Flächenschwellwerts gemessen werden, wobei die Flächenschwellwerte annähernd gleich sind oder sich zu einem gemeinsamen Bereich überlappen.

Generell ist ein hoher Tiefenschärfebereich des ersten optischen Messsystems oder eine möglichst tiefenunabhängige Abbildung bei der Projektionsflächenmessung von Vorteil, um in einem hinreichend grossen Messvolumen die Projektionsflächen korrekt bestimmen zu können. Daher sind telezentrische Beleuchtungen und/oder Objektive besonders vorteilhaft. Hinsichtlich der Beleuchtung ist eine homogene Ausleuchtung des Meßbereichs besonders vorteilhaft.

Günstig ist auch ein Aufbau des zweiten optischen Meßsystems als Durchlicht-Anordnung. Als Beleuchtungsquelle wird für das zweite optische Meßsystem eine kohärente Lichtquelle, insbesondere ein Laser bevorzugt. Es ist aber auch daran gedacht, alternativ eine Weisslichtquelle oder mehreren kohärenten Lichtquellen zu verwenden, um die Erfassung der Partikelgrössen anhand der lichtfarbabhängigen unterschiedlichen Beugung weiter zu verbessern.

Da das erste optische Meßsystem für die Erfassung größerer und das zweite optische Meßsystem für die Erfassung kleinerer Partikel ausgebildet ist, ist es weiterhin günstig, wenn das erste und das zweite optische Meßsystem unterschiedliche Grössenmessbereiche, beziehungsweise Abbildungsmaßstäbe aufweisen, wobei das zweite, diffraktive optische Meßsystem einen Abbildungsmaßstab aufweist, welche zumindest doppelt so hoch, vorzugsweise zumindest fünfmal so hoch ist, wie der Abbildungsmaßstab des ersten optischen Meßsystems.

Die Vorrichtung kann im Unterschied zu bekannten diffraktiv arbeitenden Partikelanalysatoren auch vorteilhaft dazu verwendet werden, Geschwindigkeitsverteilungen des Partikelstroms, und/oder aus den Geschwindigkeiten ermittelte Flüsse zu bestimmen. Dazu ist das erste optische Meßsystem dazu eingerichtet, zumindest zwei Bilder nacheinander aufzunehmen, wobei die Recheneinrichtung dazu eingerichtet ist, die Ortsveränderung in beiden Bildern für Partikel mit einer Größe der Flächenprojektion oberhalb eines Flächenschwellwerts zu berechnen und eine Geschwindigkeitsverteilung als Funktion der Abstandsdifferenz des Partikelorts und der Partikelgröße zu ermitteln.

Weiterhin kann die Recheneinrichtung dazu eingerichtet sein, unter Ausschluß von Partikeln mit einer Größe der Flächenprojektion oberhalb eines Flächenschwellwerts die verbleibende Grauwertverteilung zwischen den beiden Bildern zu korrelieren, anhand dessen den zugehörigen Verschiebungsvektor zu ermitteln und eine mittlere Geschwindigkeit für kleine Partikel mit einer Flächenprojektion unterhalb des Flächenschwellwerts zu berechnen. Damit können in überraschender Weise sogar Geschwindigkeitswerte von Partikeln ermittelt werden, die gar nicht mehr vom ersten optischen Meßsystem optisch aufgelöst werden.

Aus beiden Messungen kann von der Recheneinrichtung ein einheitliches Geschwindigkeitsmodell zusammengestellt werden. Dazu kann eine Datenstruktur mit Partikelhistogrammen und ort- und größenabhängigen Geschwindigkeitsmessdaten und/oder ein mit der Detektionswahrscheinlichkeit und/oder anderen Größen, wie etwa einer ermittelten Partikelgeschwindigkeit korrigiertes Partikelgrössenhistogramm, vorzugsweise in Form eines Projektionsflächenhistogramms ermittelt werden. Gerade bei breiten Partikelgrössenverteilungen ist es häufig der Fall, dass die breite Verteilung durch verschiedenartige Partikel, etwa aus verschiedenen Materialien gebildet oder verursacht ist. Vielfach sind partikuläre Stoffe hinsichtlich der Partikelzusammensetzung oder Gestalt nicht homogen. Es kann dabei wünschenswert sein, weitere Informationen über den Partikelstrom zu gewinnen, welche über eine blosse Größenverteilung hinausgeht, Dazu ist in Weiterbildung der Erfindung neben der Durchlicht-Beleuchtung eine zusätzliche mehrfarbige, vorzugsweise weisse Auflicht-Beleuchtung des ersten optischen Meßsystems vorgesehen. Die Durchlicht-Anordnung ist für die Bestimmung von Größen besonders geeignet, da die Projektionsfläche eines in Durchlicht beleuchteten Teilchens unabhängig von dessen Material, Farbe oder Textur ist. Demgegenüber kann mit einer mehrfarbigen, insbesondere einer weissen Auflicht-Beleuchtung zusätzliche Information hinsichtlich der Partikelfarbe gewonnen werden. Bei hinsichtlich des Materials inhomogenen Partikelgemischen kann die Farbe dann in den allermeisten Fällen für eine Identifizierung, beziehungsweise Klassifizierung der Partikel herangezogen werden. Als Beispiel sei ein Partikelstrom eines Abrasivs, etwa zum Sandstrahlen oder Polieren genannt. Der Partikelstrom wird neben den Abrasiv-Partikeln auch noch Abrieb-Partikel aus dem Materialabtrag enthalten. Typischerweise werden sich diese Arten von Partikeln neben ihrer Größe auch durch ihre Farbe unterscheiden. Um eine solche Diskriminierung hinsichtlich der Farbe vornehmen zu können, ist der Matrix-Sensor des ersten optischen Meßsystems vorzugsweise als Farb-Sensor ausgebildet. Die Farbinformation kann dann von der Recheneinrichtung dazu verwendet werden, Partikeln die Farbinformation zuzuordnen und eine Partikelgrössenverteilung zu errechnen, die als weiteres Attribut die Partikelfarbe oder einen der Farbe zugeordneten Parameter, wie etwa die Partikelart enthält. Im Speziellen können dabei Partikelgrössenverteilungen für Partikel bestimmter Farbe oder Teilchenart erzeugt werden.

Das Auflicht wird vorzugsweise so angeordnet, dass dessen Licht unter einem Winkel zur optischen Achse, vorzugsweise 45° und mehr die Partikel beleuchtet. Insbesondere wird die Lichtquelle dabei so kollimiert, dass deren Lichtstrahl an einer gegenüberliegenden Linse der Durchlicht-Beleuchtung ganz vorbeigeht, oder zumindest die optische Achse vor dem Auftreffen auf die Linse vollständig passiert. Damit werden störende Signale durch Reflexionen der Linse der Durchlichtbeleuchtung vermieden.

Die Farbauswertung wird vorzugsweise direkt auf der Grundlage eines Bayer-Pattern durchgeführt. Damit wird eine Umrechnung auf tatsächliche Farbwerte der Bildpunkte eingespart. Der Rechenaufwand kann weiter erheblich reduziert werden, wenn die Recheneinrichtung zunächst zu Partikeln gehörende Konturen bestimmt und dann eine Farbauswertung selektiv innerhalb der zu Partikeln gehörenden Konturen vornimmt. Auf diese Weise kann die Rechenzeit zur Ermittlung von Farbattributen gegenüber einer vollflächigen Farbauswertung um 95% und mehr reduziert werden.

An sich wird bei einer Farbauswertung eine geringere Ortsauflösung benötigt als bei der Bestimmung der Konturen der Partikel in der Durchlicht-Messung. Für letztere Messung ist andererseits eine hohe Tiefenschärfe wünschenswert, die mit einer kleinen Apertur erreicht werden kann. Wünschenswert wäre daher für eine Optimierung der Messungen die Kamera des ersten optischen Meßsystems gleichzeitig mit unterschiedlichen Aperturen betreiben zu können.

Dazu eignet sich folgendes Prinzip: Es wird eine Objektivblende der Kamera verwendet, die als ein Polarisator mit einer Aperturöffnung ausgebildet ist. Das Licht einer ersten Beleuchtung, für welche eine kleine Blende gewünscht wird, ist linear so polarisiert, dass es nicht durch den Polarisator gelangt. Mit anderen Worten ist der Polarisator in sperrender Orientierung gegenüber der Polarisationsebene des Lichts. Die zweite Beleuchtung ist unpolarisiert oder in Durchlassrichtung polarisiert. Das Licht der ersten Beleuchtung fällt so nur durch die Aperturöffnung. Das Licht der zweiten Beleuchtung wird hingegen auch durch den Polarisator durchgelassen.

Eine derartige Anordnung kann auch für andere optische Erfassungseinrichtungen sehr vorteilhaft verwendet werden. Anwendungen einer erfindungsgemäßen Blende ergeben sich beispielsweise überall dort, wo schwache, unpolarisierte Sekundärsignale generiert werden. Ein Beispiel hierfür sind Fluoreszenzaufnahmen. Hierzu würde dann nur eine in Sperrrichtung polarisierte Beleuchtung benötigt. Das von der Beleuchtung erzeugte schwache Fluoreszenzlicht kann dann den Polarisationsfilter zu 50% passieren, so dass für dieses Licht eine wesentlich größere Blende zur Verfügung steht.

Demgemäß sieht die Erfindung in einem weiteren Aspekt, ohne Beschränkung auf eine Vorrichtung zur Bestimmung von Partikelgrössen eine optische Messvorrichtung vor, die eine Kamera mit Matrix-Sensor mit vorgeschaltetem Objektiv, sowie eine Beleuchtung umfasst, wobei die Beleuchtung linear polarisiertes Licht abgibt und wobei das Objektiv der Kamera eine Blende in Form eines Polarisationsfilters mit darin angeordneter Aperturöffnung umfasst, und wobei die Lichtquelle und der Polarisationsfilter so angeordnet sind, dass die Polarisationsebene des Lichts und die Durchlassrichtung des Polarisators zueinander gekreuzt sind. Hinsichtlich der erfindungsgemäßen Vorrichtung zur Bestimmung von Partikelgrössen wird die Beleuchtung, welche mit dem Sensor eine Durchlicht-Anordnung bildet, als linear polarisierte Beleuchtung ausgebildet. Dem Matrix-Sensor ist dann ein Objektiv mit Blende vorgeschaltet, welches wie gesagt in Form eines gekreuzt zur Polarisationsebene des Lichts angeordneten Polarisationsfilters mit darin angeordneter Aperturöffnung ausgestaltet ist. Die zusätzliche Auflichtbeleuchtung kann durch mehrere verschiedenfarbige oder ein oder mehrere Weisslicht-Leuchtdioden erzeugt werden.

Gemäß einem Ausführungsbeispiel dieser Weiterbildung der Erfindung ist zwischen Kollimator und einer oder mehreren Leuchtdioden des Beleuchtungssystems ein erster Polarisator angeordnet und in der Blendenebene eines telezentrischen Objektivs ein zweiter, zum ersten um 90° gedrehter Polarisator mit einem Durchmesser, der der Auflichtblende entspricht und der eine zentrale Bohrung (Durchlichtblende) aufweist, angeordnet.

Je nach Ausgestaltung der Erfindung ist ein Polaristor für die Durchlicht-Beleuchtung aber nicht unbedingt notwendig, sofern die Lichtquelle bereits polarisiertes Licht abgibt. Dies ist zum Beispiel typischerweise bei Kantenemitter-Laserdioden der Fall.

Die Bestimmung der Partikelgrössenverteilung zu gemessenen Beugungsmustern wird vorzugsweise anhand von in der Recheneinrichtung gespeicherten Antwortfunktionen für Verteilungen von Partikeln vorgenommen. Die Antwortfunktionen korrespondieren vorzugsweise jeweils zu Verteilungen unterschiedlich grosser Partikel. Die Recheneinrichtung ist dann dazu eingerichtet, eine zu einer gemessenen Intensitätsverteilung gehörende Partikelgrößenverteilung durch Anpassung einer gewichteten Überlagerung der Antwortfunktionen zu bestimmen. Die Wichtungsfaktoren bei der Überlagerung korrespondieren dann direkt zu Abmessungen der Partikel. Die Wichtungsfaktoren können dabei sowohl zu den Projektionsflächenanteilen, als auch zu den Durchmessern oder den Volumina der Partikel korrespondieren.

Der Vorteil in der Verwendung von Antwortfunktionen liegt darin, dass in der Antwortfunktion auch gerätespezifische Parameter berücksichtigt werden. Mit solchen Parametern können Abberationen der Optik, Inhomogenitäten der Beleuchtung berücksichtigt werden. Auch kann dadurch eine Messung im Fernfeld vermieden werden, die ansonsten notwendig ist, um ein Beugungsmuster in Fraunhofer-Näherung beschreiben zu können. Eine Messung im Fernfeld erfordert einen großen Abstand zum Meßvolumen und entsprechende große und damit aufwändige Optiken. Wird dagegen, wie erfindungsgemäß bevorzugt mit kleineren Brennweiten unterhalb von 55 Millimetern und entsprechend kürzeren Abständen gemessen, wird der Mittelpunkt eines Beugungsmusters merklich durch den Abstand des zugehörigen Streuzentrums von der optischen Achse bestimmt. Da den Antwortfunktionen räumliche Partikelverteilungen zugrundeliegen und damit bereits verschiedene Abstände von Partikeln zur optischen Achse berücksichtigt sind, wird dieses Problem umgangen.

Zur Erstellung der Antwortfunktionen können Abberationen der Optik des Spektrumanalysators, beziehungsweise des zweiten optischen Meßsystems, insbesondere die radiale Mittelpunktverschiebung des Spektrums als Folge einer lateralen und/oder radialen Verschiebung eines Objekts im Objektraum als eine Funktion des radialen Abstands zum Ort der optischen Achse auf dem Matrix-Sensor dargestellt und die Beleuchtungsstärke im Objektraum mit konstantem Radius abgetastet werden. Für jeden Radius kann dann das verschobene und gewichtete Beugungsbild über dem Vollwinkel akkumuliert werden. Anschließend kann eine mittlere Punktspreizfunktion durch Integration über dem Radius, vorzugsweise im gesamten Bildfeld berechnet werden. Diese Punktspreizfunktion kann dann anstelle der normierten Besselfunktion für die Approximation eingesetzt werden.

Die Ermittlung der Antwortfunktion kann durch reine Berechnung erfolgen, sofern die optischen Eigenschaften des Systems hinreichend bekannt sind. Ebenfalls möglich ist die Erstellung von Antwortfunktionen anhand von Modell-Verteilungen, etwa mittels geeigneter Schablonen, welche Streuzentren von Partikeln bestimmter Größe simulieren. Insbesondere können aber auch beide Methoden miteinander kombiniert werden. Um räumliche Partikelverteilungen mittels der Schablonen nachzubilden, können zur Bestimmung der Antwortfunktionen Messungen mit unterschiedlich weit entlang der optischen Achse verschobenen Schablonen und/oder mit Schablonen mit dreidimensional verteilten Streuzentren durchgeführt werden.

Um den Rechenaufwand bei der Bestimmung der Teilchengrössenverteilung zu verringern, ist es weiterhin günstig, wenn die Recheneinrichtung dazu eingerichtet ist, ein Beugungsspektrum aus Integrationen der Bildhelligkeit über Kreisringe um das Zentrum eines oder mehrerer vom Matrix-Sensor der zweiten optischen Meßanordnung aufgezeichneten Beugungsmustern zu ermitteln. Der Begriff Beugungsspektrum bezeichnet im Sinne der Erfindung dabei die Intensitätsverteilung in radialer Richtung, also die Intensität als Funktion des radialen Abstands zum Zentrum des vom Sensor erfassten Beugungsmusters. Damit wird die Information des zweidimensionalen Bildes auf eine Funktion einer Variablen, nämlich des Radius reduziert. Anhand dieses Beugungsspektrums kann nun eine Anpassung eines errechneten Spektrums vorgenommen werden, aus welchem die Partikelgrössenverteilung dann abgeleitet wird.

Bei der Berechnung der Teilchengrössenverteilung aus der Messung der Beugungsmuster können große Partikel das Ergebnis verfälschen, da sie immer hochfrequente Störungen erzeugen. Um solche Störungen zu minimieren, können in besonders einfacher Weise Aufnahmen, welche zu grosse Partikel enthalten, von der Analyse des Beugungsmusters ausgeschlossen werden. Dazu ist in Weiterbildung der Erfindung die Recheneinrichtung eingerichtet, Ausgangsdaten des zweiten optischen Meßsystems durch Fouriertransformation, vorzugsweise schnelle Fouriertransformation oder eine äquivalente Transformation auszuwerten und den hochfrequenten Anteil oberhalb eines Frequenz-Schwellwerts zu bestimmen, wobei Beugungsmuster, bei welchen die Intensität des hochfrequenten Anteils einen weiteren Schwellwert überschreitet, aussortiert werden.

Als Frequenz-Schwellwert ist hier selbstverständlich nicht eine Frequenz im Sinne einer Anzahl von Schwingungen pro Zeiteinheit zu verstehen. Vielmehr bezieht sich dieser Wert auf die Periodenlänge der Oszillationen im aufgenommenen Bild. Bei der Akkumulation der nicht aussortierten Daten, beziehungsweise Bilder ist es weiterhin günstig, wenn die Recheneinrichtung auch die Integrationszeiten des Sensors akkumuliert und abschließend das Ergebnis durch die akkumulierte Integrationszeit dividiert.

Die Erfindung wird nachfolgend anhand von Ausführungsbeispielen und unter Bezugnahme auf die Zeichnungen näher erläutert. Dabei verweisen gleiche Bezugszeichen auf gleiche oder entsprechende Elemente. Es zeigen:

Fig. 1 ein Testraster zur Ermittlung der Antwortfunktion des zweiten optischen Meßsystems,

Fig. 2 ein vom zweiten optischen Meßsystem aufgenommenes Beugungsbild des in Fig. 1 gezeigten Rasters,

Fig. 3 ein Spektrum einer Partikelverteilung,

Fig. 4 eine anhand des Spektrums bestimmte Partikelgrössenverteilung,

Fig. 5 ein vom zweiten optischen Meßsystem aufgenommenes Beugungsbild an einem Partikelstrom mit einer breitbandigen Partikelgrössenverteilung,

Fig. 6 eine Seitenansicht und

Fig. 7 eine Frontansicht der Messanordnung gesehen in Richtung des Partikelflusses,

Fig. 8 ein Schema des optischen Designs der ersten optischen Meßanordnung, und

Fig. 9 ein Ausführungsbeispiel des Aufbaus der zweiten optischen Meßanordnung.

In einem Partikelstrom sollen mittels der Erfindung Partikel mit vorzugsweise bekannten Eigenschaften optisch vermessen und zu Clustern, beziehungsweise Klassen zusammengefasst werden. Die Eigenschaften (Features) der Cluster werden bestimmt, insbesondere werden Flächenverteilungen abgeleitet. Aus den Flächenverteilungen können wiederum Masseverteilungen abgeleitet werden. Aus den Flächen- Grössen- oder Massenverteilungen können Prozessregelgrößen für eine Inline-Regelung von der erfindungsgemäßen Meßvorrichtung vorgeordneten Maschinen, die den Partikelstrom beeinflussen, insbesondere den Partikelstrom erzeugen, abgeleitet werden. Beispielsweise kann der Druck, mit dem eine Düse zur Erzeugung eines Aerosols beaufschlagt wird, in Abhängigkeit von der Partikelgrössenverteilung geregelt werden. Eine Aufgabe besteht auch darin, an nur einem Messort einen möglichst großen Durchsatz und somit eine hohe Messrate zu erreichen, damit der Messzyklus möglichst kurz wird. Auch die Erstellung von Prognosen anhand von Veränderungen der Partikelgrössenverteilungen ist möglich.

Die Projektionsflächen von Partikeln werden senkrecht zum mittleren Geschwindigkeitsvektor einer partikelbehafteten Strömung innerhalb eines transparenten Messvolumens optisch erfasst. Während der Messung können gegebenenfalls auch Strömungsparameter berechnet und die Detektionswahrscheinlichkeit von Partikeln erfasst werden.

Die Partikeldichte unterscheidet sich bei für die Erfindung besonders geeigneten Typen von Partikelströmen typischerweise um mehrere Größenordnungen, wobei kleine Partikel im Allgemeinen deutlich häufiger sind als große.

Für einen typischerweise große Messbereich von Teilchendurchmessern zwischen 1 Mikrometer und 5 Millimetern ist ein definierter minimalen Messquerschnitt günstig, innerhalb welchem auch große Partikel im wesentlichen störungsfrei transportiert werden können. Daher ist für eine erfindungsgemäße optische Inspektion auch ein hoher Tiefenschärfenbereich, der größer als der Messbereich ist (im Beispiel größer als 5 Millimeter), von Vorteil.

Zur Messung der Projektionsfläche der Partikel, beziehungsweise allgemein deren Größe werden zwei grundsätzlich verschiedene Klassen von Verfahren verwendet. In einem ersten Verfahren wird das Beugungsbild der Partikel in einem meist relativ großen Messabstand erzeugt - und dann ausgewertet. Hierzu wird der Partikelstrom vorzugsweise telezentrisch und/oder vorzugsweise im Durchlicht beleuchtet, das Beugungsbild wird durch einen Sensor aufgezeichnet, der vorzugsweise zylindersymmetrisch, beziehungsweise entlang von Kreisen um das Zentrum des Beugungsbildes ausgewertet wird. Die so gemessene radiale Energie-, beziehungsweise Intensitätsverteilung steht im Zusammenhang mit der theoretisch berechneten Energie-, beziehungsweise Intensitätsverteilung von als kreisförmig angenommenen Partikeln. Diese Annahme ist bei kleinen Partikeln in guter Näherung erfüllt.

Das Beugungssignal eines kreisförmigen Teilchens kann in der Fernfeldnäherung (Fraunhofer Beugung) durch eine Besselfunktion erster Gattung beschrieben werden. Für die Signalauswertung existieren zwei Varianten: erstens die Anwendung sehr schneller Sensoren, die prinzipiell nur ein Teilchen innerhalb des Messvolumens auswerten oder zweitens von Sensoren, die die Superposition von mehreren Teilchen auswerten. Das Verfahren, beziehungsweise eine entsprechende Vorrichtung wird als Spektrumanalysator bezeichnet und für die Erfindung als zweites optisches Meßsystem eingesetzt.

Für die praktischen Anwendung ist es nachteilig, dass insbesondere bei großen Partikeln signifikante Messfehler auftreten. Diese entstehen durch Formabweichungen vom Modell einer kreisförmigen Projektionsfläche sowie durch am Bildrand angeschnittene Objekte. Ferner ist eine Farbauswertung zur Klassifizierung von Partikeln gleicher Fläche, jedoch unterschiedlicher Farbe nicht möglich oder zumindest schwierig. Für die Auswertung der Farbe ist eine breitbandige, beziehungsweise mehrfarbige Beleuchtung im Auflicht günstig. Die dabei verwendeten unterschiedlichen Wellenlängen würden bei geometrisch identischen Partikeln im Spektralbereich zu unterschiedlich großen Beugungsbildern führen, die sich komplex überlagern. Deshalb ist ein Beugungs-Meßverfahren für eine differentielle Analyse eines Partikelstroms unter Berücksichtigung der Partikelfarbe nur bedingt geeignet.

Ein weiterer Ansatz beruht auf einer Durchlichtmessung nach dem Prinzip eines im Durchlicht arbeitenden Messmikroskops. Dieses vom ersten optischen Meßsystem durchgeführte Verfahren wird als Projektionsflächenanalysator bezeichnet. Der Vorteil besteht darin, dass Partikel vereinzelt (segmentiert) werden können und dass anschließend mit Konturdaten eine Formanalyse durchführbar ist. Aufgrund der Tiefenschärfeanforderungen ist die Messung für relativ große Partikel (im Beispiel ca. ab 100$\mu$ bei 5 mm Tiefenschärfe) besonders geeignet.

Der hohe Tiefenschärfebereich erfordert wiederum eine kleine numerische Apertur. Dadurch reduziert sich die allerdings die geometrische Auflösung erheblich, so dass kleine Partikel auch aus diesem Grund nicht oder nur schlecht aufgelöst werden können.

Die Aufgabe der Erfindung einer breitbandigen Analyse der Grössenverteilung eines Partikelstroms wird also dadurch gelöst, dass in einem Partikelstrom ein Spektrumanalysator (die zweite optische Meßvorrichtung) und ein Projektionsflächenanalysator (die erste optische Meßvorrichtung) an unmittelbar benachbarten Messorten oder über Strahlteiler am gleichen Messort angewendet werden und wahlweise mit weiteren Messmethoden ergänzt werden können.

In einer besonders vorteilbehafteten Ausführung wird über einem transparenten Messvolumen, durch das ein Partikelstrom verläuft, zunächst eine telezentrische Durchlichtquelle und ein telezentrisches Objektiv mit einer Kamera angeordnet. Hierzu werden kurze Lichtimpulse einer Leistungs-LED zu einem telezentrischen Strahl aufgeweitet, der den gesamten Messquerschnitt annähernd homogen durchstrahlt. Die Partikel werden dann mit dem telezentrischen Objektiv auf einen ersten Matrix-Sensor projiziert. Die Blendenzahl des Objektivs wird vorzugsweise ausreichend groß gewählt, so dass im gesamten Tiefenschärfebereich eine annähernd gleich scharfe Abbildung mit einer ebenfalls annähernd konstanten Punktspreizfunktion entsteht. Unter Berücksichtigung der Punktspreizfunktion kann ein Kantenmodell für eine vorzugsweise subpixelgenaue Detektion von Konturpunkten entstehen.

Das Bildsignal wird mit hoher Bildwiederholrate, vorzugsweise mindestens 10 Bilder pro Sekunde abgetastet und anschließend mit einem auf die Punktspreizfunktion abgestimmten subpixelgenauen Algorithmus in Konturpunkte konvertiert und dann zu Konturen segmentiert. Die dafür erforderliche hohe Rechenleistung (typischerweise mehr als 40 000 MIPS) wird besonders bevorzugt hardwareseitig mit einem FPGA als Bestandteil der erfindungsgemäßen Recheneinrichtung realisiert. Anschließend werden Konturen ab einer bestimmten Länge an einen Prozessor (DSP) ausgegeben. Das Problem, dass an den Bildrändern Partikel nur teilweise abgebildet werden, kann exakt dadurch gelöst werden, dass die Randberührung der Partikel ausgewertet wird fund gemäß einer Weiterbildung der Erfindung bei Bedarf die analytische Fortsetzung approximiert wird. Dadurch ist der DSP in der Lage, die Objekte der einlaufenden Bilder in Videoechtzeit zu verarbeiten.

Besonders vorteilhaft kann die Methode mit einem Farbsensor ergänzt werden. Hierzu wird als Durchlichtquelle eine vorzugsweise weiße LED oder eine andere vorzugsweise weisse Lichtquelle eingesetzt, die Verstärkung der Farbkanäle wird so abgeglichen, dass bei fehlenden Partikeln ein homogener, gleichmäßig ausgesteuerter Hintergrund entsteht. Damit funktioniert die Durchlichtmessung wie weiter oben im monochromatischen Fall beschrieben. Zusätzlich wird nun eine weitere, ebenfalls weiße Auflichtquelle eingesetzt, die synchron zur Durchlichtquelle getaktet wird, jedoch eine nicht notwendig zur Durchlichtquelle identische Belichtungszeit aufweist.

Die Belichtung der Auflichtquelle wird vorteilhaft so gewählt, dass auf dem Farbsensor bei einem weißen Referenzobjekt höchstens 50%, besonders bevorzugt ca. 20% der Aussteuerung im Vergleich zur Aussteuerung durch die Durchlichtquelle erreicht wird. Durch eine nichtlineare Grauwertkennlinie bei der Konturpunkterkennung, die vorzugsweise durch einen Convolvers realisiert wird, wird so der Konturort nicht oder nur marginal beeinflusst.

Die hardwaregestützte Vorverarbeitung liefert verkettete, attributierte Konturpunkte, die u.a. durch einen charakteristischen Kontrast gekennzeichnet sein können. Durch Verkettung benachbarter Konturpunkte kann in Echtzeit eine Objektliste erzeugt werden, die die Fläche, den Umfang und den Kontrastbelag (richtungsabhängig korrekt akkumulierte Kontrast der verketteten Konturpunkte) als wichtige Objektmerkmale enthält. Aus dieser Liste werden die relevanten Objekte gefiltert, als Maß werden die Werte

```
Kontrastbelag x Umfang > Schwellwert 1, und

Projektionsfläche > Schwellwert 2
```

verwendet. Diese Kriterien haben die Eigenschaft, dass zwischen relativ kontrastarmen, jedoch wolkigen Staubablagerungen und klar abgegrenzten, relativ scharf abgebildeten Partikeln unterschieden werden kann.

Durch lokale Histogramme können in Weiterbildung der Erfindung ortsfeste Ablagerungen erkannt werden. Dazu wird das Bildfeld vorzugsweise in geometrische Zonen aufgeteilt und über eine gesamte Messfolge, beispielsweise ca. 1000 Bilder, werden die in der Zone gefunden Partikel incl. ihres Schwerpunkts eingetragen. Wenn in einer Zone eine Anzahl gleichgroßer Objekte mit gleichen Schwerpunktkoordinaten auftritt, dann handelt es sich um eine Verschmutzung. In diesem Fall kann der Produktstrom abgeschaltet und ein neues Teach-in erfolgen, wobei die betreffenden Regionen mit Verschmutzungen bei der nachfolgenden Bildanalyse ausgenommen werden.

Nach dem durch den ersten Verarbeitungsschritt die Konturen geeigneter Partikel mit einer Mindestfläche detektiert wurden, wird anschließend das Farbsignal innerhalb der Kontur ausgewertet. Hierfür genügt meist eine gegenüber der Konturvermessung verminderte Auflösung. Deshalb kann der im Auflicht betriebene und deshalb unempfindlichere Farbkanal länger belichten, als der Durchlichtkanal.

Ferner ist eine kleine Blende (z.B. k=50) des telezentrischen Messobjektivs zur Erzielung eine hohen Tiefenschärfe für den Farbkanal ungünstig, da die Empfindlichkeit stark vermindert wird. Es ist deshalb vorteilhaft, die Blende durch einen Polarisatinosfilter mit einer Bohrung auf der optischen Achse darzustellen und ferner vor die Durchlichtquelle einen zu diesem gekreuzten Polarisator zu stellen. Dadurch ergibt sich für die Durchlichtquelle eine erste Apertur (kleine Blendenöffnung), die durch den Durchmesser der Bohrung bestimmt ist, für die Auflichtquelle entsteht eine größere Apertur (größere Blendenöffnung), die durch den Durchmesser des freigegebenen Teils des Polarisators in der Blendenebene bestimmt wird. Dadurch entsteht für die Farbaufnahme im Vergleich zur Durchlichtanordnung ein größerer Unschärfekreis, die resultierende Empfindlichkeit des Farbsensors verbessert sich quadratisch mit der Vergrößerung des effektiven Durchmessers.

Im Echtzeitbetrieb.wird nun das Farbbild des Sensors in den Hauptspeicher eines digitalen Signalprozessors (DSP) gemeinsam mit den Konturen ab einer bestimmten Länge übertragen. Aus den Konturen werden Regions of Interest (ROI) interessante Bereiche ermittelt, in denen dann lokale Farbbilder für die weitere Auswertung berechnet werden.

Abschließend wird das Farbbild des Partikels innerhalb der Kontur ausgewertet, zu jedem Partikel wird ein Featurevektor erzeugt und in einer Partikelliste abgelegt, aus der abschließend von der Recheneinrichtung Parameter von Partikelclustern geschätzt werden können.

Unmittelbar neben dem Messort der Durchlichtmessanordnung oder über Strahlteilung am gleichen Ort wird ein zweiter Messkanal nach der Beugungsmethode angeordnet.

Dieser Kanal arbeitet im Unterschied zu bekannten Anordnungen nicht im Fernfeld, sondern im Beugungsnahfeld (Fresnel- Näherung) oder im Übergangsbereich. Deshalb enthält die Anordnung vorzugsweise Maßnahmen zur Strahlformung und Ausblendung, insbesondere ein Pinhole zur präzisen Querschnittsdefinition. Eine weitere Maßnahme, mit welcher vermieden wird, dass hohe Intensitäten der direkten oder vorwärtsgestreuten Strahlung auf den Sensor trifft, ist eine Sackbohrung in einer Linse, wobei die direkte Strahlung der Beleuchtung, also der nicht an Partikeln gebeugte Anteil des Lichts auf die Sackbohrung fokussiert ist, und wobei die Sackbohrung mit einem lichtabsorbierenden Material ausgekleidet ist. Damit wird der direkte Strahl der Quelle in der Sackbohrung absorbiert. Gebeugte Anteile gehen in radialer Richtung an der Sackbohrung vorbei und können so detektiert werden. Ein geeignetes lichtabsorbierendes Material ist beispielsweise Chromdioxid.

Das Beugungsbild wird auf einen zylindersymmetrischen Sensor abgebildet. Dieser wird durch einen CMOS- oder CCD-Sensor dargestellt, dessen Bilddaten mithilfe einer parametrierbaren hardwaregestützten Transformation in Polarkoordinaten subpixelgenau ausgegeben werden. Die Abtastwerte werden auf den jeweiligen Radius azimutal integriert, das Ausgangssignal nach der Integration entspricht dem Signal eines Kreisringsensors, es wird als spektrales

EP 2 411 787 B1

Kreisintegral bezeichnet. Über einem Messzyklus werden die spektralen Kreisringintegrale akkumuliert, es entsteht das akkumulierte Kreisringintegral (AKI), das im direkten Zusammenhang mit den akkumulierten Spektren der Partikel steht.

Aufgrund der stochastischen Ortsverteilung kleiner Partikel im Messvolumen (es sind mehrere 100 000 pro Zyklus) entstehen Spektren, die aufgrund der Fresnelnäherung zwar determiniert sind, jedoch nicht identisch mit gleichem Zentrum wie in der Fernfeldnäherung (Fraunhofer) abgebildet werden.

Deshalb wird vorteilhaft ein spezielles spektrales Modell verwendet. Hierzu wird zunächst angenommen, dass sämtliche Partikel den gleichen Durchmesser hätten. Anschließend wird die Superposition der Spektren sämtlicher Partikel im Messvolumen unter Berücksichtigung ihrer räumlichen Verteilung, der bekannten Lichtverteilung des Lasers im Messvolumen und den Abberationen der abbildenden Optik berechnet. Es entsteht die Antwortfunktion, beziehungsweise System Response Function SRF=f(R,ω) des realen Systems. Anschließend wird die Berechnung und/oder Messung für andere Radien wiederholt. Bei Bedarf können bekannte Verteilungen, z.B. Geschwindigkeitsschwankungen berücksichtigt werden. Dadurch wird das System vollständig kalibriert.

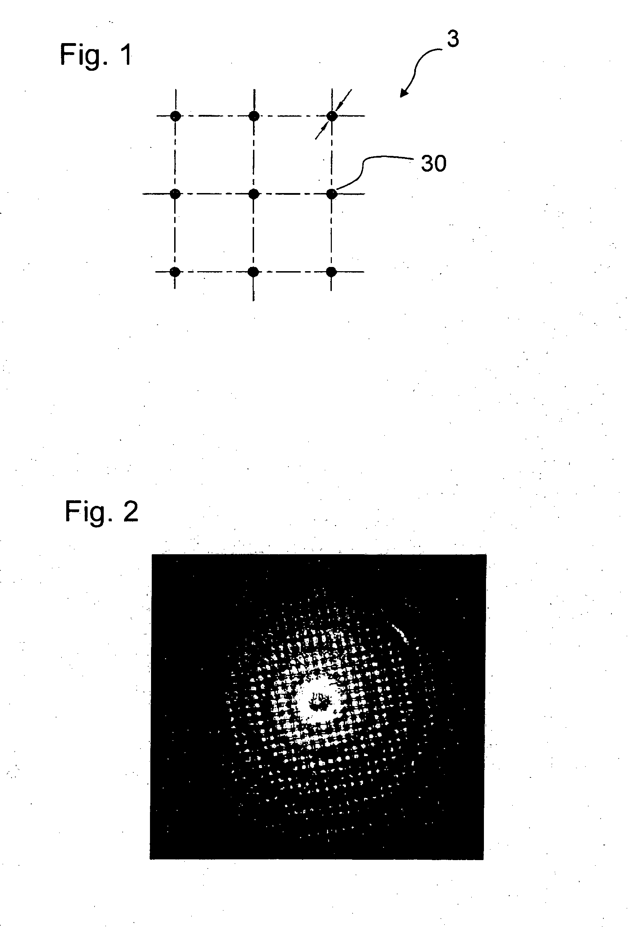

Im Einzelnen kann die SRF wie folgt ermittelt werden. Auf einem Target wird eine in einem Raster 3 angeordnete Gruppe von Kreispunkten 30 mit gleichem Durchmesser in den Strahlengang gegeben. Eine solche Probe ist in Fig. 1 gezeigt. Beispielsweise kann die Probe wie in Fig. 1 gezeigt ein quadratisches 3x3-Raster von Kreispunkten 30 mit einem Durchmesser von 50 Mikrometern aufweisen.

Mit Bildverarbeitungmitteln.wird die Aufnahme des vom zweiten optischen Meßsystem aufgenommenen Beugungsbildes des Rasters 3 vermessen. Ein solches Beugungsbild ist in Fig. 2 dargestellt. Deutlich zu erkennen sind die Beugungsringe durch Beugung an den einzelnen Kreispunkten 30, denen ein rasterförmiges Muster aufgrund der Beugung am durch diese Punkte gebildeten Raster überlagert ist.

Typischerweise ist das Raster 3 kleiner als das Gesichtsfeld des Sensors. Die Gitterkonstante, beziehungsweise der Abstand der nächst benachbarten Kreispunkte 30 kann beispielsweise 200 Mikrometer betragen, wobei der beleuchtende Laserstrahl einen Strahldurchmesser von 4 mm hat.

Für jeden Verschiebungsvektor des zentralen Gitterpunkts gegenüber der optischen Achse, erhält man einen Abbildungsmaßstab β (dieser ist in guter Näherung konstant) und einen geringen Offset des Spektrums gegenüber der optischen Achse, der aus der Lage der Punkte im Spektrum exakt berechnet werden kann. Unter anderem würde bei einer Messung im Fernfeld ein solcher Offset nicht mehr merklich sein. Allerdings erfordert eine Fernfeldnäherung sehr lange Brennweiten.

Unter diesen Meßbedingungen folgt die Energie-, beziehungsweise Intensitätsverteilung in guter Näherung einer aus der Besselfunktion erster Ordnung abgeleiteten Funktion. Anschließend werden die Energieverteilungen gewichtet akkumuliert, man erhält die SRF einer Partikelverteilung mit gleichem Durchmesser (im oben genannten Beispiel also von Partikeln mit 50 Mikrometern Strahldurchmesser). Nun kann eine weitere weitere Probe mit anderem Durchmesser eingesetzt und wiederum das Beugungsbild aufgezeichnet werden. Dieser Vorgang kann insbesondere für eine Vielzahl von Durchmessern wiederholt werden. Aus diesen Proben kann so eine das Meßsystem vollständig beschreibende zweidimensionale Funktion SRF(R,ω)erhalten werden, wobei R den Partikelradius und die Frequenz im Beugungsspektrum bezeichnet. Je nach Kenntnis der optischen Eigenschaften des Systems ist es auch möglich, die Antwortfunktionen zu berechnen, oder die Berechnung von Antwortfunktionen auf einem oder mehreren gemessenen Beugungsbildern aufzubauen, beziehungsweise berechnete Antwortfunktionen mit gemessenen Beugungsspektren abzugleichen.

Das Spektrum S(ω) ergibt sich aus der mit den Flächenanteilen c[R] gewichteten Summe der entsprechenden Antwortfunktionen:

betreffenden Regionen mit v

Zur Bestimmung der Projektionsflächenanteile, oder allgemein der Partikelgrössen ist nun die inverse Aufgabe zu lösen, das heisst es ist die bestmögliche gewichtete Kombination von Funktionen SRF(R,ω) zu bestimmen, deren Superposition einer bestimmten Bedingung genügt. Beispielsweise können die Antwortfunktionen so überlagert werden, dass der mittlere quadratische Fehler minimiert wird. Der Vektor c[R] beschreibt dann die gesuchte Flächen- , beziehungsweise Grössenverteilung. Auf diese Weise wird die Fredholmsche Integralgleichung auf numerischem Wege gelöst. Die Auswahl der Radien ist in weiten Grenzen beliebig, so dass z.B. logarithmische Verteilungen direkt berechnet werden können. Die so erhaltene Flächenverteilung kann auf die Gesamtfläche im Raster (im Beispiel des in Fig. 1 gezeigten Rasters ist die Gesamtfläche gegeben durch 9 x ($\pi$/4*140$\mu$m=0.138mm$^2$) normiert werden. Insbesondere kann eine gemessene Verteilung auch anhand eines Überlapps mit der anhand des ersten optischen Meßsystems bestimmten Verteilung normiert werden.

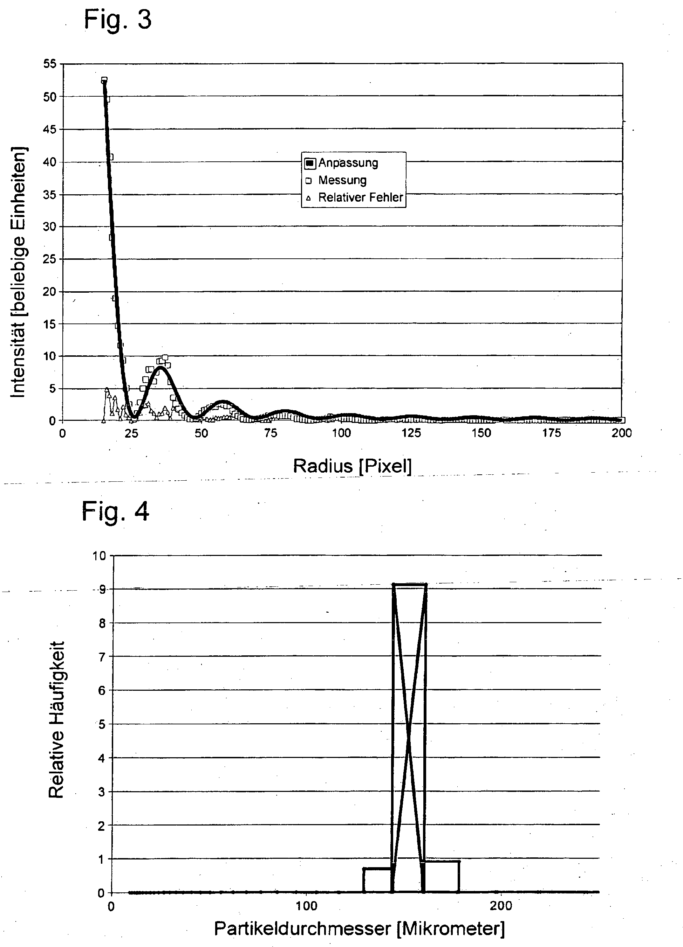

Ein Beispiel einer Anpassung gemessener Beugungsmuster, mittels zuvor ermittelter Antwortfunktionen ist in den Fig. 3 und 4 dargestellt. Fig. 3 zeigt ein anhand eines Beugungsbildes, wie es beispielhaft in Fig. 2 dargestellt ist, ermitteltes Spektrum, wobei die Messwerte mit offenen Quadraten dargestellt sind. Das Spektrum wird wie oben beschrieben durch Kreisintegration um das Zentrum des Beugungsbildes erhalten. Demgemäß gibt das Spektrum die Intensität, beziehungsweise Energie als Funktion des Radius zum Zentrum des Beugungsbildes wieder. Eine Anpassung mit Antwortfunktionen unter Minimierung des quadatischen Fehlers ist als durchgezogene Linie dargestellt. Zusätzlich eingezeichnet ist der sich aus der verbleibenden Abweichung der Messwerte von der Anpassung ergebende relative Fehler. Anhand der Anpassung wird dann die zugehörige Partikelgrössenverteilung errechnet. Diese ist in Fig. 4 dargestellt. Bei dem vorstehenden Beispiel liegt Demgemäß eine monodisperse Partikelgrössenverteilung mit Partikelradien von 150 Mikrometern vor.

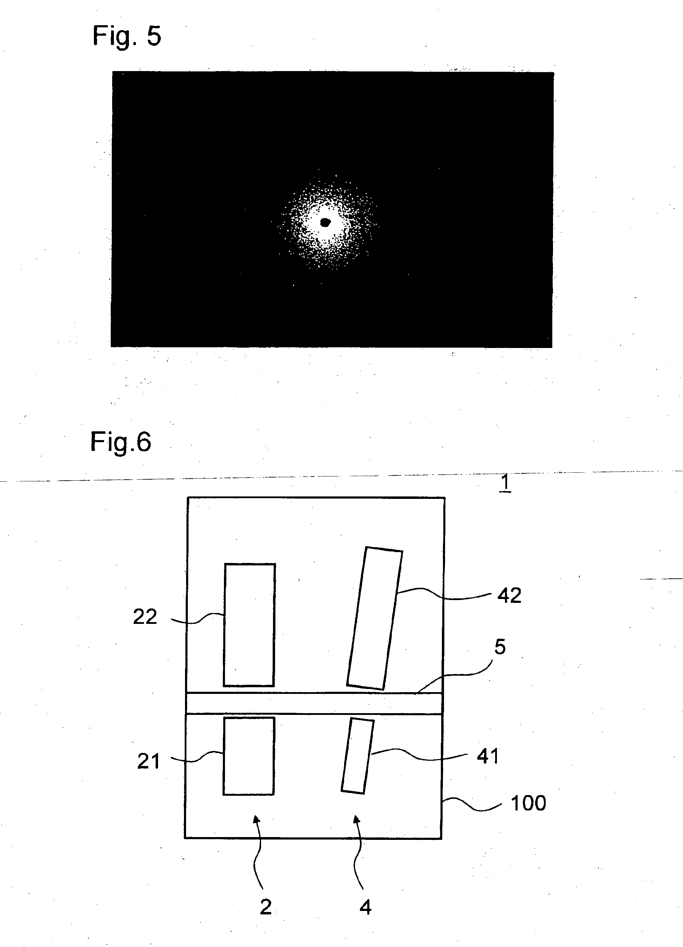

Bei nicht monodispersen, beziehungsweise breitbandigen Partikelgrössenverteilungen führt die Überlagerung der Beugungsmuster mit verschiedenen Ortsfrequenzen im allgemeinen dazu, dass die Beugungsringe ineinander übergehen und somit kein Ringmuster mehr erkennbar ist. Ein solches Beispiel zeigt Fig. 5. Die mittlere Partikelgrösse liegt bei diesem Beispiel bei unter 200 Mikrometern, allerdings ist die Verteilung so breitbandig, dass keine diskreten Beugungsringe mehr erkennbar sind. Dennoch lässt sich eine eindeutige Anpassung von Antwortfunktionen an den radialen Intensitätsverlauf erzielen, so dass die Parti-kelgrössenve,rteilung rekonstruiert werden kann.

Der Spektrumanalysator kann außerdem hinsichtlich eines Offsets korrigiert werden, indem wird das akkumulierte Bild ohne Partikelstrom von der akkumulierten spektralen Summe subtrahiert wird.

Für die Berechnung der Projektionsflächenverteilung in einem durchströmten Medium ist bei zeitdiskreter Aufnahme von Stichproben die Kenntnis der statistischen Objektverteilung von Vorteil.

In einem im Wesentlichen laminar durchströmten Meßkanal ist die Geschwindigkeitsverteilung der Partikel typischerweise nicht homogen, insbesondere ist hier die Geschwindigkeit an den Rändern des Kanals aufgrund von Stoßverlusten im allgemeinen geringer als im Zentrum. Auch bewegen sich große Partikel langsamer als kleinere. Zur Berücksichtigung derartiger Effekte kann die mittlere Partikelverteilung im Messvolumen bestimmt werden. Hierzu kann zunächst eine ortsabhängige Geschwindigkeitsmessung durchgeführt werden.

Besonders vorteilhaft ist die Vermessung der Geschwindigkeiten nach folgendem Verfahren: Es werden im Durchlicht zwei unmittelbar aufeinander folgende Aufnahmen mittels des ersten optischen Meßsystems realisiert. Im Bildfeld befinden sich kleine und große Partikel. Im ersten Verfahrensschritt werden die großen Partikel (z.B. ab 100 Mikrometer Durchmesser) in beiden Bildern segmentiert, es werden die Zentrumskoordinaten und die Objektkonturen bestimmt. Anschließend wird eine Korrespondenzliste gleicher Objekte aus beiden Bildern gebildet und das Bildfeld in mehrere Streifen in Transportrichtung geteilt. Für jeden der Streifen wird der mittlere Verschiebungsvektor gebildet und durch die Aufnahmezeitdifferenz dividiert. Man erhält eine laterale Geschwindigkeitsverteilung, die noch für unterschiedlich große Partikel getrennt berechnet werden kann.

Die Geschwindigkeit der kleinen Partikel, die vom System nicht aufgelöst werden, kann nach folgendem Verfahren berechnet werden: In einem ersten Schritt werden in beiden Bildern die Flächen, in denen bereits große Partikel gefunden wurden, für die Ermittlung der Geschwindigkeit gesperrt. Es verbleibt eine wolkige Grauwertverteilung, die bei fehlenden Turbulenzen vom ersten zum zweiten Bild transportiert wird. Anschließend wird die Kreuzkorrelationsfunktion zwischen beiden Bildern berechnet, die gesperrten Strukturen (es genügt die Sperrung eines der Bilder, die anschließende Normierung verhindert Rechenfehler) werden ausgenommen.

Man erhält einen mittleren Verschiebungsvektor für die Klasse kleiner Partikel, beispielsweise kleiner 100 Mikrometer, der in eine mittlere Geschwindigkeit umgerechnet werden kann. In diesem Größenbereich treten nur geringe Reibungsverluste an den Grenzflächen auf, die Geschwindigkeitsvariation im Durchmesserbereich bis $100\mu$ ist gering. Deshalb kann der gemessene Wert in guter Näherung als mittlere Strömungsgeschwindigkeit angenommen werden.

Bei der Berechnung von Größenhistogrammen, wie beispielsweise Projektionshistogrammen (Flächenverteilungen) in einem Partikelstrom ist der Durchsatz pro Flächenklasse zur jeweiligen Geschwindigkeit am Messort proportional. Die Listen den Partikelfeatures werden demzufolge mit den Messdaten der Geschwindigkeit multipliziert (bei großen Partikel zusätzlich ortsabhängig). Bei kleinen Partikeln wird der Geschwindigkeitsmesswert auf die vom Beugungssensor gemessene Verteilung aufmultipliziert.

Vorteilhaft ist wie gesagt die Überlappung der Messbereiche beider Sensoren, die hier anfallende Information (beide Sensoren liefern in einem Intervall gleiche Ergebnisse) kann zur Kalibrierung der Flächenanteile insbesondere des Beugungssensors verwendet werden.

Im folgenden wird auf den Aufbau der optischen Messanordnung näher eingegangen.

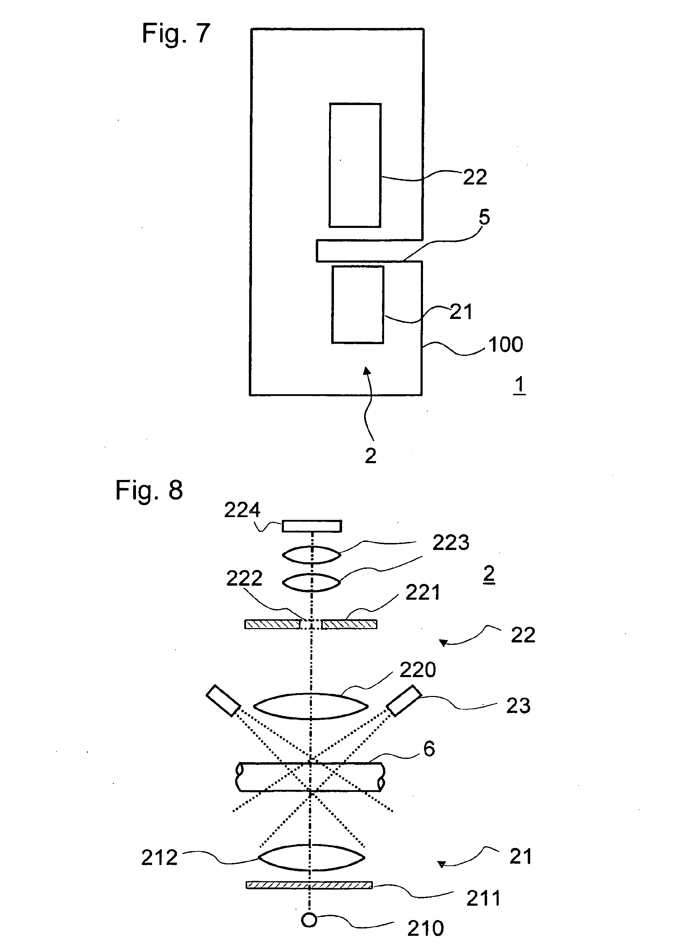

Dazu zeigen Fig. 6 eine Seitenansicht der Messanordnung und Fig. 7 eine Frontansicht gesehen in Richtung des Partikelflusses.

Die Messanordnung 1 umfasst ein Gehäuse 100, in welchem die erste optische Meßanordnung 2 und die zweite optische Meßanordnung 4 untergebracht sind. Das Gehäuse weist einen Kanal 5 auf, in welchen ein den Partikelstrom führendes Rohr eingesetzt werden kann. Wie in Fig. 7 zu erkennen ist, ist der Kanal seitlich offen, so dass die Messanordnung 1 in einfacher Weise auf ein solches Rohr seitlich aufgesetzt werden kann.

Die erste optische Meßvorrichtung 2 umfasst eine Beleuchtung 21 und eine Kamera 22. Beleuchtung 21 und Kamera 22 sind in Gegenüberstellung angeordnet, so dass eine Durchlicht-Anordnung gebildet wird. Kamera 22 und Beleuchtung 21 bilden außerdem ein telezentrisches Meßsystem, was vorzugsweise durch ein parallelisiertes Licht der Beleuchtung einerseits und einer großen Tiefenschärfe der Kamera 22 andererseits realisiert wird. Dies ist von Vorteil, um bei der Abbildung von Projektionsflächen der Partikel auf den Matrix-Sensor der Kamera 22 keine entfernungsabhängigen Maßstabsänderungen zu erhalten, welche die Berechnung der Partikelgrössenverteilung verfälschen können.

Auch das zweite, diffraktiv messende optische Meßsystem 4 ist als Durchlicht-Anordnung mit köhärenter Beleuchtung 41 und Kamera 42 aufgebaut. Als Quelle für die Beleuchtung 41 kommen insbesondere Halbleiter-Laser in Betracht. Denkbar ist aber auch eine Weisslichtquelle, um dann mit der Kamera 42 wellenlängenabhängige Beugungsspektren aufzuzeichnen. Die optische Achse des zweiten optischen Meßsystems 4 ist, wie anhand von Fig. 6 zu erkennen ist, gegenüber der Ebene senkrecht zum Kanal 5, beziehungsweise der durch den Kanal definierten Flussrichtung der Partikel leicht verkippt. Damit wird unter anderem verhindert, dass störende Interferenzeffekte durch Rückreflexionen an den Fensterbereichen des einzusetzenden Rohres auftreten.

Fig. 8 zeigt schematisch einen detailierteren Aufbau des ersten optischen Meßsystems 2. Die Beleuchtung 21 umfasst eine Leuchtquelle, wie beispielsweise eine Weisslicht-Leuchtdiode 210. Das Licht der Leuchtdiode 210 wird mittels eines Polarisators 211, vorzugsweise einer Polarisatorfolie linear polarisiert. Eine Kondenserlinse 212 erzeugt einen Parallelstrahl, mit welchem das den Partikelstrom führende Rohr 6 durchleuchtet wird. Die Kamera 22 umfasst einen Matrix-Sensor 224 mit einem vorgeschalteten telezentrischen Objektiv. Das Objektiv umfasst eine Feldlinse 220, eine im Strahlengang hinter der Feldlinse 220 angeordnete Blende und der Blende nachgeordnet ein Okular mit Okularlinsen 223 vor dem Matrix-Sensor 224. Die Blende ist in Form eines Polarisationsfilters 221 mit einer mittigen Apertur 222 aufgebaut. Die Polarisationsfilter 221 und 211 sind gekreuzt angeordnet, so dass das Licht der Weisslicht-LED 210 nicht durch den Polarisationsfilter 221, sondern nur durch dessen mittige Apertur 222 gelangt. In Bezug auf die von der Weisslicht-LED 210 im Rohr 6 beleuchteten Partikel hat die Kamera daher effektiv eine Blende von der Grösse der mittigen Apertur 222.

Zusätzlich ist eine Auflicht-Beleuchtung vorgesehen. Diese umfasst kollimierte Lichtquellen 23, welche das Rohr von der Kamera 22 aus gesehen schräg von vorne beleuchten. Der Beleuchtungswinkel und die Kollimierung sind so gewählt, dass die Lichtstrahlen an der Kondenserlinse 212 vorbeigehen. Damit werden die Durchlichtmessung störende Reflexe der Auflichtbeleuchtung an der Kondenserlinse 212 vermieden. Das Licht der Auflichtbeleuchtung ist unpolarisierte oder so polarisierte, dass das von den Partikeln im Rohr 6 reflektierte Licht vom Polarisator 221 durchgelassen wird. Im Falle von unpolarisiertem Licht werden dabei selbstverständlich die in Sperrichtung polarisierten Anteile, also typischerweise die Hälfte des Lichts gesperrt. Dennoch weist auf diese Weise das Objektiv für das Licht der Auflicht-Beleuchtung eine effektiv wesentlich grössere Blende auf, als für die Durchlicht-Beleuchtung. Dies ist sinnvoll, da für die Auflicht-Beleuchtung zur Farberkennung eine geringere Ortsauflösung ausreichend ist, dafür aber ein grösseres Signal erhalten wird.

Dieses Prinzip einer Objektivblende in Form eines Polarisators mit Apertur lässt sich auch vorteilhaft auf andere Anordnungen anwenden und ist daher ausdrücklich nicht auf das Ausführungsbeispiel einer Messung von Partikelgrössen mit zwei verschiedenen optischen Meßanordnungen beschränkt. Eine derartige Anordnung kann überall dort angewendet werden, wo unterschiedliche Beleuchtungen mit unterschiedlicher Signalstärke vorliegen. Als Beispiel sei eine Fluoreszenzmessung genannt. Hier kann mit polarisierte Licht angeregt und die Objekte mit polarisiertem Licht und kleiner Blende abgebildet werden. Für das schwache, unpolarisierte Fluoreszenzsignal steht dann eine wesentlich grössere Blende und damit eine höhere Empfindlichkeit der Kamera zur Verfügung. Auch kann eine wie anhand von Fig. 8 beschriebene Kamera mit Beleuchtung auch für andere Aufgaben als die Bestimmung von Partikelgrössenverteilungen, etwa allgemein für die Bildsegmentierung und Bilderkennung eingesetzt werden.

Demgemäß ist in einem weiteren Aspekt der Erfindung eine Vorrichtung zur Beleuchtung und Aufnahme von Objekten, insbesondere zur Konturerkennung und Objektsegmentierung vorgesehen, welche eine polarisierte Beleuchtung und einen Matrix-Sensor mit Objektiv umfasst, wobei das Objektiv eine Blende in Form eines Polarisators mit einer zentralen Apertur aufweist. Die Beleuchtung kann gegenüber dem Objektiv angeordnet sein, um eine Durchlicht-Beleuchtung zu erzielen. Zusätzlich können, wie in Fig. 2 gezeigt, eine oder mehrere Auflicht-Lichtquellen vorgesehen sein, welche kollimiert und schräg zur optischen Achse ihr Licht einstrahlen, so dass es an einer Kondenserlinse der Durchlicht-Beleuchtung vorbeigeht.

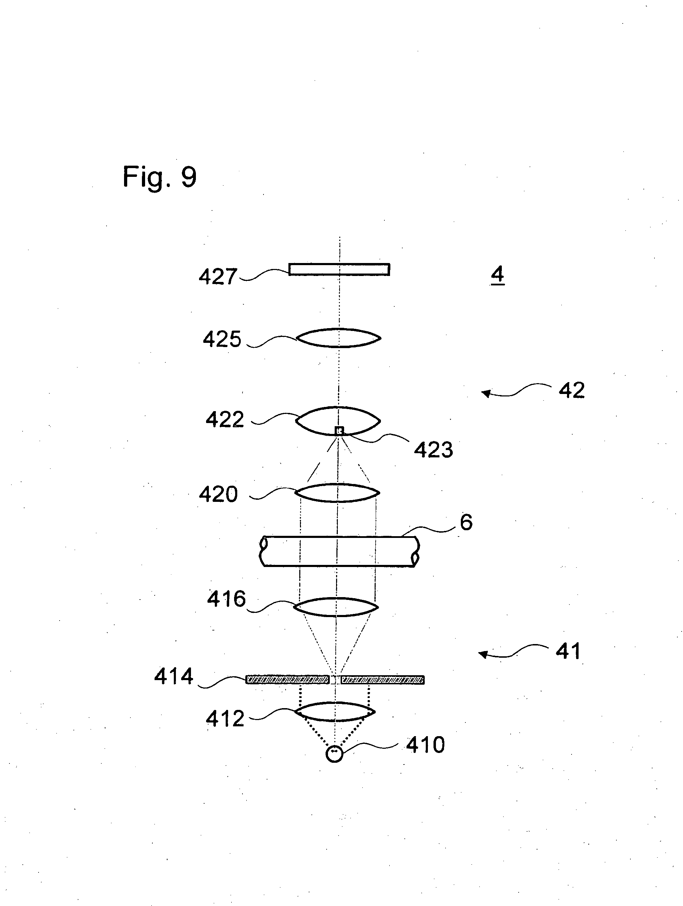

Fig. 9 zeigt ein Ausführungsbeispiel des Aufbaus der zweiten optischen Meßanordnung 4. Die Beleuchtung 41 umfasst eine Laserdiode 410 zur Erzeugung kohärenten, monochromatischen Lichts. Eine nachgeschaltete Linse 412 wird als Kondenser verwendet. Für eine präzise Strahldefinition wird ein Kollimator 414 mit einem Pinhole eingesetzt. Mit diesem Pinhole wird eine punktförmig Lichtquelle verwendet, wobei das hindurchgehende Licht mittels einer weiteren Kondenserlinse 416 parallelisiert wird.

Die Kamera 42 umfasst eine Feldlinse 420 als erstes, dem partikelführenden Rohr 6 zugewandtes optisches Element. Im Strahlengang in einem Abstand nachgeschaltet ist eine weitere Linse 422 angeordnet. In dieser Linse befindet sich mittig eine Sackbohrung 423, die allseitig mit hoch lichtabsorbierendem Material, beispielsweise $CrO_2$ ausgekleidet ist. In einem praktischen Beispiel wurde eine mit $CrO_2$ beschichtete Sackbohrung mit einem Durchmesser von kleiner 200 Mikrometern und einer Tiefe von kleiner 250 Mikrometern verwendet.

Wie anhand des gestrichelt eingezeichneten Strahlengangs zu erkennen ist, wird die direkte Laserstrahlung, welche auf geradem Wege, ohne gebeugt zu werden durch das Rohr 6 hindurchgeht, von der Feldlinse 420 genau auf die Sackbohrung 423 fokussiert. Die gebeugten Anteile gehen demgegenüber seitlich an der Sackbohrung 423 vorbei. Das Beugungsbild wird dann mittels einer weiteren Linse 425 auf den Matrix-Sensor 427 fokussiert.

Die Erfindung, wie sie vorstehend beschrieben wurde, ist für eine Vielzahl von Anwendungen geeignet, da breitbandige Partikelgrößenverteilungen auf vielen Gebieten der Technik auftreten können. Eine Anwendung ist die Antriebstechnik oder Umwelttechnik, hier etwa um Ruß- oder Abgaspartikel von Triebwerken sehr schnell analysieren zu können. Auch für die Analyse von partikelhaltigen Ausstössen von Schornsteinen kann die Erfindung verwendet werden. In der chemischen und pharmazeutischen Industrie kommt es bei vielen Reaktionen zu einer Partikelbildung, etwa beim Ausfällen von Stoffen, bei der Polymersynthese, bei der Erzeugung von Granulaten, auch hier wieder bei Verbrennungsvorgängen, sowie bei der Detektion und Klassifikation von partikulären Naturstoffen. Auch hier kann die Erfindung zur schnellen Kontrolle und weiter auch zur Prozesssteuerung eingesetzt werden. So kann beispielsweise die Reaktionstemperatur bei chemischen Prozessen auch anhand der detektierten Teilchengrösse gesteuert werden. In der pharmazeutischen und auch der chemischen Industrie kann die Vorrichtung zur Kontrolle der Partikelgrössenverteilungen von partikulären Vorprodukten verwendet werden.

Weiterhin können auch Filterungsvorgänge, etwa allgemein in der Gebäudetechnik, beispielsweise für saubere oder Reinräume, oder in der Klimatechnik überwacht werden.

**Patentansprüche**

1. Vorrichtung zur Bestimmung von Partikelgrössen von Partikelströmen durch ein Messvolumen mit einer das Messvolumen erfassenden optischen Messanordnung (1) und einer an die optische Messanordnung (1) angeschlossenen Recheneinrichtung, wobei die optische Messanordnung (1) ein erstes, vorzugsweise telezentrisches, optisches Messsystem (2) mit einem ersten Matrix-Sensor (224) und einer Beleuchtung (21) und ein zweites optisches Messsystem (4) mit einem zweiten Matrix-Sensor (427) umfasst, wobei die Beleuchtung (21) das Messvolumen durchleuchtet und der erste Matrix-Sensor (224) und die Beleuchtung (21) eine Durchlicht-Anordnung bilden, wobei mit dem zweiten Matrix-Sensor (427) ein Beugungsmuster der Partikel erfassbar ist, wobei mit der Recheneinrichtung aus den Bilddaten des ersten Matrix-Sensors (224) Projektionsflächen von Partikeln innerhalb des durchleuchteten Messvolumens bestimmbar sind, anhand der Projektionsflächen und des Beugungsmusters der Partikel eine Grössenverteilung der Partikel im Messvolumen bestimmbar ist, **dadurch gekennzeichnet, dass** die Grössenverteilung aus anhand der Projektionsflächen bestimmten Partikelgrössen einerseits und anhand des Beugungsmusters bestimmten Partikelgrössen andererseits bildbar ist und die anhand des Beugungsmusters bestimmte Grössenverteilung mittels eines mit dieser Grössenverteilung überlappenden Bereichs der anderen, anhand der Projektionsflächen bestimmten Grössenverteilung kalibrierbar, beziehungsweise auf diese skalierbar ist.

2. Vorrichtung gemäss Anspruch 1, **dadurch gekennzeichnet, dass** das zweite optische Messsystem (4) als Durchlicht-Anordnung aufgebaut ist.

3. Vorrichtung gemäss einem der vorstehenden Ansprüche, **dadurch gekennzeichnet, dass** das erste und das zweite optische Messsystem (2, 4) unterschiedliche Vergrösserungen der Abbildung aufweisen, wobei das zweite, diffraktive optische Messsystem (4) einen Abbildungsmassstab aufweist, welcher zumindest doppelt so hoch, vorzugsweise zumindest fünfmal so hoch ist, wie der Abbildungsmassstab des ersten optischen Messsystems (2).

4. Vorrichtung gemäss einem der vorstehenden Ansprüche, **dadurch gekennzeichnet, dass** das erste optische Messsystem (2) dazu eingerichtet ist, zumindest zwei Bilder nacheinander aufzunehmen, wobei die Recheneinrichtung dazu eingerichtet ist, die Ortsveränderung in beiden Bildern für Partikel mit einer Grösse der Flächenprojektion oberhalb eines Flächenschwellwerts zu berechnen und eine Geschwindigkeitsverteilung als Funktion der Abstandsdifferenz des Partikelorts und der Partikelgrösse zu ermitteln, und wobei die Recheneinrichtung eingerichtet ist, unter Ausschluss von Partikeln mit einer Grösse der Flächenprejektion oberhalb eines Flächenschwellwerts die verbleibende Grauwertverteilung zwischen den beiden Bildern zu korrelieren, den zugehörigen Verschiebungsvektor zu ermitteln und eine mittlere Geschwindigkeit für kleine Partikel zu berechnen und aus beiden Messungen ein einheitliches Geschwindigkeitsmodell zusammenzustellen und eine Datenstruktur mit Partikelhistogrammen und ort- und grössenabhängigen Geschwindigkeitsmessdaten oder ein mit der Detektionswahrscheinlichkeit korrigiertes Partikelgrössenhistogramm, vorzugsweise in Form eines Projektionsflächenhistogramms zu ermitteln.

5. Vorrichtung gemäss einem der vorstehenden Anspruche, **dadurch gekennzeichnet, dass** das erste optische Messsystem (2) eine zusätzliche mehrfarbige, vorzugsweise weisse Auflicht-Beleuchtung (21) umfasst, wobei der Matrix-Sensor (224) des ersten optischen Messsystems (2) als FarbSensor ausgebildet ist.

6. Vorrichtung gemäss dem vorstehenden Anspruch, **dadurch gekennzeichnet, dass** die Recheneinrichtung dazu eingerichtet ist, Partikeln die Farbinformation zuzuordnen und eine Partikelgrössenverteilung zu errechnen, die als weiteres Attribut die Partikelfarbe oder einen der Farbe zugeordneten Parameter enthält.

7. Vorrichtung gemäss einem der beiden vorstehenden Ansprüche, **dadurch gekennzeichnet, dass** die Recheneinrichtung dazu eingerichtet ist, zu Partikeln gehörende Konturen zu bestimmen und eine Farbauswertung selektiv innerhalb der zu Partikeln gehörenden Konturen durchzuführen.

8. Vorrichtung gemäss einem der vorstehenden Ansprüche, **dadurch gekennzeichnet, dass** die Beleuchtung (21), als linear polarisierte Beleuchtung (21) ausgebildet ist, wobei dem Matrix-Sensor (224) der ersten optischen Messanordnung (1) ein Objektiv mit Blende vorgeschaltet ist, welches in Form eines gekreuzt zur Polarisationsebene des Lichts angeordneten Polarisationsfilters mit darin angeordneter Aperturöffnung ausgestaltet ist.

9. Vorrichtung gemäß einem der vorstehenden Ansprüche, **dadurch gekennzeichnet, dass** mit der Recheneinrichtung ein Beugungsspektrum aus Integrationen der Bildhelligkeit über Kreisringe um das Zentrum eines oder mehrerer vom Matrix-Sensor (427) der zweiten optischen Messanordnung (1) aufgezeichneten Beugungsmustern ermittelbar ist.

10. Vorrichtung gemäss einem der vorstehenden Ansprüche, **dadurch gekennzeichnet, dass** die Recheneinrichtung eingerichtet ist, Ausgangsdaten des zweiten optischen Messsystems (4) durch Fouriertransformation, vorzugsweise schnelle Fouriertransformation oder eine äquivalente Transformation auszuwerten und den hochfrequenten Anteil oberhalb eines Schwellwerts zu bestimmen, wobei Beugungsmuster, bei welchen die Intensität des hochfrequenten Anteils einen weiteren Schwellwert überschreitet, aussortiert werden.

11. Vorrichtung gemäss einem der vorstehenden Ansprüche, **dadurch gekennzeichnet, dass** in der Recheneinrichtung Antwortfunktionen für Verteilungen von Partikeln gespeichert sind, wobei die Antwortfunktionen jeweils zu Verteilungen unterschiedlich grosser Partikel korrespondieren, und wobei die Recheneinrichtung dazu eingerichtet ist, eine zu einer gemessenen Intensitätsverteilung gehörende Partikelgrössenverteilung durch Anpassung einer gewichteten Überlagerung der Antwortfunktionen zu bestimmen.

12. Vorrichtung gemäss einem der vorstehenden Ansprüche, **dadurch gekennzeichnet, dass** dem Matrix-Sensor (427) des zweiten optischen Messsystems (4) ein Objektiv mit einer Brennweite kleiner als 50 Millimeter vorgeschaltet ist und / oder ein Objektiv mit einer Linse (422) vorgeschaltet ist, in welchem eine Sackbohrung (423) eingefügt ist, die mit einem lichtabsorbierenden Material ausgekleidet ist und auf welche das direkte, nicht an Partikeln gebeugte Licht der Lichtquelle fokussiert ist.

13. Verfahren zur Bestimmung von Partikelgrössenverteilungen von Partikelströmen, insbesondere mittels einer Vorrichtung gemäss einem der vorstehenden Ansprüche, bei welchem mittels eines ersten, vorzugsweise telezentrischen, optischen Messsystems (2) mit einer Beleuchtung (21) ein Messvolumen durchleuchtet und das Durchlicht-Signal von einem ersten Matrix-Sensor (224) des ersten optischen Messsystems (2) erfasst wird, wobei anhand des Durchlicht-Signals Projektionsflächen von Partikeln mittels einer Recheneinrichtung bestimmt werden, und wobei mittels eines zweiten Matrix-Sensors (427) eines zweiten optischen Messsystems (4) der optischen Messanordnung (1) ein Beugungsmusters der Partikel erfasst wird, **dadurch gekennzeichnet, dass** mittels der Recheneinrichtung die Grössenverteilung aus anhand der Projektionsflächen bestimmten Partikelgrössen einerseits und anhand des Beugungsmusters bestimmten Partikelgrössen andererseits gebildet wird, wobei von der Recheneinrichtung die anhand des Beugungsmusters bestimmte Grössenverteilung mittels eines mit dieser Grössenverteilung überlappenden Bereichs der anhand der Projektionsflächen bestimmten Grössenverteilung kalibriert wird.

14. Verfahren nach Anspruch 13, **dadurch gekennzeichnet, dass** zur Erstellung einer Partikelgrössenverteilung von beiden Matrix-Sensoren (224, 427) mehrere Bilder, vorzugsweise zumindest 20, besonders bevorzugt zumindest 100 Bilder, aufgenommen werden und/oder zur Bestimmung der Projektionsflächen von Partikeln Konturpunkte vorzugsweise mit Subpixel-Genauigkeit bestimmt und anschliessend zu Konturen segmentiert werden.

15. Verfahren nach einem der Ansprüche 13 oder 14, **dadurch gekennzeichnet, dass** Aberrationen der Optik des zweiten optischen Messsystems (4), insbesondere die radiale Mittelpunktverschiebung des Spektrums als Folge einer lateralen und/oder radialen Verschiebung eines Objekts im Objektraum als eine Funktion des radialen Abstands zum Ort der optischen Achse auf dem Matrix-Sensor (427) dargestellt und die Beleuchtungsstärke im Objektraum mit konstantem Radius abgetastet wird, wobei für jeden Radius das verschobene und gewichtete Beugungsbild über dem Vollwinkel akkumuliert wird, und wobei eine mittlere Punktspreizfunktion durch Integration über dem Radius berechnet wird.

**Claims**

1. Device for determining the particle sizes of particle flows through a measuring volume with an optical measuring arrangement (1) recording the measuring volume and a calculating device connected to the optical measuring arrangement (1), whereby the optical measuring arrangement (1) comprises a first, preferably telecentric, optical measuring system (2) with a first matrix sensor (224) and a lighting device (21), and a second optical measuring system (4) with a second matrix sensor (427), whereby the lighting device (21) shines through the measuring volume, and the first matrix sensor (224) and the lighting device (21) form a shine-through arrangement, whereby a diffraction pattern of the particles can be recorded with the second matrix sensor (427), whereby projection surfaces of particles within the shone-through measuring volume can be determined by the calculating device from the image data of the first matrix sensor (224), and a size distribution of the particles in the measuring volume can be determined on the basis of the projection surfaces and of the diffraction patterns of the particles,
**characterized in that**
the size distribution can be formed from the particle sizes determined on the basis of the projection surfaces, on the one hand, and from particle sizes determined on the basis of the diffraction pattern, on the other hand, and the size distribution determined on the basis of the diffraction pattern can be calibrated, or scaled to this, by means of an area of the other size distribution which is determined on the basis of the projection surfaces and which overlaps with this size distribution.

2. Device in accordance with Claim 1, **characterized in that** the second optical measuring system (4) is designed as a shine-through arrangement.

3. Device in accordance with one of the above-mentioned Claims, **characterized in that** the first and the second optical measuring systems (2, 4) show different enlargements of the image, whereby the second, diffractive optical measuring system (4) has an imaging scale that is at least twice as high, preferably at least five times as high, as the imaging scale of the first optical measuring system (2).

4. Device in accordance with one of the above-mentioned Claims, **characterized in that** the first optical measuring system (2) is set up to record at least two successive images, whereby the calculating device is set up to calculate the location change in both images for particles with a surface projection size above a surface threshold value and to determine a speed distribution as a function of the distance difference of the particle location and of the particle size, and whereby the calculating device is set up to correlate the remaining gray value distribution between the two images, excluding particles with a surface projection size above a surface threshold value, to determine the relevant displacement vector and to calculate an average speed for small particles, and from both measurements to draw up a uniform speed model, and to determine a data structure with particle histograms and location and size-dependent speed measuring data or particle size histogram corrected with detection probability, preferably in the form of a projection surface histogram.

5. Device in accordance with one of the above-mentioned Claims, **characterized in that** the first optical measuring system (2) comprises an additional multi-color, preferably white illuminator (21), whereby the matrix sensor (224) of the first optical measuring system (2) is designed as a color sensor.

6. Device in accordance with the above Claim, **characterized in that** the calculating device is set up to assign particles color information and to calculate a particle size distribution that contains the particle color or a parameter assigned to the color as a further attribute.

7. Device in accordance with one of the above two Claims, **characterized in that** the calculating device is set up to determine contours belonging to particles and to perform a color evaluation selectively within the contours belonging to particles.

8. Device in accordance with one of the above-mentioned Claims, **characterized in that** the lighting device (21) is designed as a linear polarized lighting device (21), whereby a lens with diaphragm is located in front of the matrix sensor (224) of the first optical measuring arrangement (1), said lens being designed in the form of a polarization filter with aperture opening positioned across the polarization level of the light.

**9.** Device in accordance with one of the above-mentioned Claims, **characterized in that** with the calculating device it is possible to determine a diffraction spectrum from integrations of the image brightness by means of circular rings around the center of one or more diffraction samples recorded by the matrix sensor (427) of the second optical measuring arrangement (1).

**10.** Device in accordance with one of the above-mentioned Claims, **characterized in that** the calculating device is set up to evaluate output data of the second optical measuring system (4) through Fourier transformation, preferably fast Fourier transformation or an equivalent transformation and to determine the high-frequency portion above a threshold value, whereby diffraction patterns in which the intensity of the high-frequency portion exceeds a further threshold value are removed.

**11.** Device in accordance with one of the above-mentioned Claims, **characterized in that** response functions for particle distributions are stored in the calculating device, whereby the response functions each correspond to distributions of differently sized particles, and whereby the calculating device is set up to determine a particle size distribution belonging to a measured intensity distribution by adjustment of a weighted overlay of the response functions.

**12.** Device in accordance with one of the above-mentioned Claims, **characterized in that** a lens with a focal length of less than 50 millimeters is located in front of the matrix sensor (427) of the second optical measuring system (4) and / or a lens with one element (422) is located in front of the matrix sensor, a blind hole (423) being drilled in said lens, said hole being lined with light-absorbing material and on which the direct light which is not diffracted by particles is focused.

**13.** Procedure for determining particle size distributions of particle flows, in particular by means of a device in accordance with one of the above Claims, in which by means of a first, preferably telecentric, optical measuring system (2) with a lighting device (21) a measuring volume is shone through and the shine-through signal is detected by a first matrix sensor (224) of the first optical measuring system (2), whereby on the basis of the shine-through signal projection surfaces of particles can be determined with the help of a calculating device, and whereby a diffraction pattern of the particles is recorded by means of a second matrix sensor (427) of a second optical measuring system (4) of the optical measuring arrangement (1), **characterized in that** with the help of the calculating device, the size distribution is formed from the particle sizes determined on the basis of the projection surfaces, on the one hand, and on the basis of the diffraction pattern of certain particle sizes, on the other hand, whereby the size distribution determined by the calculating device on the basis of the diffraction pattern can be calibrated by means of an area overlapping with this size distribution of the size distribution determined on the basis of the projection surfaces.

**14.** Procedure in accordance with Claim 13, **characterized in that** to generate a particle size distribution, several images, preferably at least 20, especially preferred at least 100 images, are recorded by both matrix sensors (224, 427) and/or to determine the projection surfaces of particles, contour points, preferably with sub-pixel accuracy, are determined and then segmented to form contours.

**15.** Procedure in accordance with one of Claims 13 or 14, **characterized in that** optical aberrations of the second optical measuring system (4), in particular the radial center point shift of the spectrum as a consequence of a lateral and/or radial shift of an object in the object space as a function of the radial distance from the location of the optical axis, are shown on the matrix sensor (427) and the illumination intensity in the object space is scanned with a constant radius, whereby for each radius the shifted and weighted diffraction image is accumulated above the full angle, and whereby an average point spread function is calculated by integration over the radius.

**Revendications**

**1.** Dispositif de détermination des tailles de particules de flux de particules à travers un volume de mesure avec un ensemble de mesure optique (1) détectant le volume de mesure et un dispositif de calcul raccordé à l'ensemble de mesure optique (1), l'ensemble de mesure optique (1) comprenant un premier système de mesure optique, de préférence télécentrique (2) avec un premier détecteur à matrice (224) et un éclairage (21) et un second système de mesure optique (4) avec un second détecteur à matrice (427), l'éclairage (21) éclairant le volume de mesure et le premier détecteur à matrice (224) et l'éclairage (21) formant un ensemble de lumière transmise, avec le second détecteur à matrice (427) un échantillon de diffraction des particules étant détectable, avec le dispositif de calcul des surfaces de projection de particules à l'intérieur du volume de mesure éclairé pouvant être déterminées à partir des données d'image du premier détecteur à matrice (224), à l'aide des surfaces de projection et de l'échantillon de diffraction des particules une répartition des tailles des particules pouvant être déterminée dans le volume de mesure,

**caractérisé en ce que**

la répartition des tailles peut être formée à partir des tailles de particules déterminées à l'aide des surfaces de projection d'une part et à partir des tailles de particules déterminées à l'aide de l'échantillon de diffraction d'autre part et la répartition des tailles déterminée à l'aide de l'échantillon de diffraction peut être calibrée au moyen d'une zone chevauchant cette répartition des tailles de l'autre répartition des tailles déterminée à l'aide des surfaces de projection, ou être modulée sur celle-ci.

2. Dispositif selon la revendication 1, **caractérisé en ce que** le second système de mesure optique (4) est conçu en tant qu'ensemble de lumière transmise.

3. Dispositif selon l'une des revendications précédentes, **caractérisé en ce que** le premier et le second système de mesure optique (2, 4) présentent différents agrandissements de l'image, le second système de mesure optique diffractif (4) présentant une échelle d'image qui est au moins deux fois plus haute, de préférence au moins cinq fois plus haute que l'échelle d'image du premier système de mesure optique (2).

4. Dispositif selon l'une des revendications précédentes, **caractérisé en ce que** le premier système de mesure optique (2) est conçu pour enregistrer au moins deux images l'une à la suite de l'autre, le dispositif de calcul étant conçu pour calculer le déplacement dans les deux images pour des particules d'une taille de la projection de surface supérieure à une valeur seuil de surface et déterminer une répartition de la vitesse en fonction de la différence d'écart de l'emplacement de la particule et de la taille de la particule, et le dispositif de calcul étant conçu, à l'exception des particules avec une taille de la projection de surface supérieure à une valeur seuil de surface, pour corréler la répartition des niveaux de gris restante entre les deux images, pour déterminer le vecteur de déplacement associé et calculer une vitesse moyenne pour les petites particules et pour établir un modèle de vitesse unique à partir des deux mesures et déterminer une structure de données avec des histogrammes de particules et des données de mesure de vitesse en fonction de l'emplacement et des tailles ou un histogramme des tailles de particules corrigé avec la probabilité de détection, de préférence sous la forme d'un histogramme de surface de projection.

5. Dispositif selon l'une des revendications précédentes, **caractérisé en ce que** le premier système de mesure optique (2) comprend un éclairage par lumière réfléchie supplémentaire multicolore, de préférence blanche (21), le détecteur à matrice (224) du premier système de mesure optique (2) étant conçu en tant que détecteur de couleur.

6. Dispositif selon l'une des revendications précédentes, **caractérisé en ce que** le dispositif de calcul est conçu pour attribuer l'information de la couleur aux particules et calculer une répartition des tailles de particules, qui contient comme attribut supplémentaire la couleur des particules ou un paramètre attribué à la couleur.

7. Dispositif selon l'une des deux revendications précédentes, **caractérisé en ce que** le dispositif de calcul est conçu pour déterminer les contours appartenant aux particules et procéder à l'évaluation de la couleur de manière sélective à l'intérieur des contours appartenant aux particules.

8. Dispositif selon l'une des revendications précédentes, **caractérisé en ce que** l'éclairage (21) est conçu en tant qu'éclairage polarisé de manière linéaire (21), un objectif avec diaphragme étant disposé en amont du détecteur à matrice (224) du premier ensemble de mesure optique (1), ledit objectif ayant la forme d'un filtre de polarisation disposé en croix par rapport au niveau de la polarisation de la lumière avec ouverture disposée à l'intérieur.

9. Dispositif selon l'une des revendications précédentes, **caractérisé en ce qu'**avec le dispositif de calcul un spectre de diffraction peut être déterminé à partir d'intégrations de la luminosité de l'image via les anneaux de cercle autour du centre d'un ou de plusieurs échantillons de diffraction enregistrés par le détecteur à matrice (427) du second ensemble de mesure optique (1).

10. Dispositif selon l'une des revendications précédentes, **caractérisé en ce que** le dispositif de calcul est conçu pour évaluer des données de sortie du second système de mesure optique (4) par le biais de la transformation de Fourier, de préférence la transformation de Fourier rapide ou une transformation équivalente et déterminer la part de haute fréquence au-dessus d'une valeur seuil, les échantillons de diffraction, au niveau desquels l'intensité de la part de haute fréquence dépasse une autre valeur seuil, étant extraits.

11. Dispositif selon l'une des revendications précédentes, **caractérisé en ce que** dans le dispositif de calcul, des fonctions de réponse pour les répartitions des particules sont enregistrées, les fonctions de réponse correspondant chacune aux répartitions des particules de différentes tailles, et le dispositif de calcul étant conçu pour déterminer une répartition des tailles de particules associée à une répartition de l'intensité mesurée par l'adaptation d'un recouvrement pondéré des fonctions de réponse.

12. Dispositif selon l'une des revendications précédentes, **caractérisé en ce qu'**un objectif avec une distance focale inférieure à 50 mm et/ou un objectif avec une lentille (422) sont disposés en amont du détecteur à matrice (427) du second système de mesure optique (4), un trou borgne (423) étant inséré dans ledit objectif, ledit trou borgne étant revêtu d'un matériau absorbant la lumière et la lumière directe non fléchie sur les particules de la source lumineuse étant focalisée sur ledit trou borgne.

13. Procédé permettant de déterminer des répartitions de tailles de particules de flux de particules, en particulier au moyen d'un dispositif selon l'une des revendications précédentes, dans lequel au moyen d'un premier système de mesure optique, de préférence télécentrique (2) avec un éclairage (21) un volume de mesure est éclairé et le signal de lumière transmise est détecté par un premier détecteur à matrice (224) du premier système de mesure optique (2), à l'aide du signal de lumière transmise des surfaces de projection des particules étant déterminées au moyen d'un dispositif de calcul, et à l'aide d'un second détecteur à matrice (427) d'un second système de mesure optique (4) de l'ensemble de mesure optique (1) un échantillon de diffraction des particules étant détecté,
**caractérisé en ce que**
au moyen du dispositif de calcul, la répartition des tailles peut être formée à partir des tailles de particules déterminées à l'aide des surfaces de projection d'une part et à partir des tailles de particules déterminées à l'aide de l'échantillon de diffraction d'autre part, la répartition des tailles déterminée à l'aide de l'échantillon de diffraction au moyen d'une zone chevauchant cette répartition des tailles de l'autre répartition des tailles déterminée à l'aide des surfaces de projection pouvant être calibrée par le dispositif de calcul.

14. Procédé selon la revendication 13, **caractérisé en ce que** pour établir une répartition des tailles de particules par les deux détecteurs à matrice (224, 427) plusieurs images, de préférence au moins 20, plus préférentiellement au moins 100 images sont enregistrées et/ou pour déterminer les surfaces de projection des particules des points de contour sont déterminés de préférence avec une précision au sous-pixel près et sont ensuite segmentés en contours.

15. Procédé selon l'une des revendications 13 ou 14, **caractérisé en ce que** des aberrations de l'optique du second système de mesure optique (4), en particulier le déplacement radial du point central du spectre à la suite d'un déplacement latéral et/ou radial d'un objet dans la distance focale objet sont représentées en fonction de la distance radiale par rapport à l'emplacement de l'axe optique sur le détecteur à matrice (427) et le pouvoir éclairant est détecté dans la distance focale objet avec un rayon constant, pour chaque rayon l'image de diffraction déplacée et pondérée étant accumulée via l'angle à 360°, et une fonction d'étalement du point moyenne étant calculée par intégration via le rayon.

Fig. 1

Fig. 2

## Fig. 3

## Fig. 4

## Fig. 5

## Fig.6

Fig. 7

22

5

21

100

2

1

Fig. 8

224

223

222 221

2

22

220

23

6

212

21

211

210

Fig. 9

427 ⌇

425 ⌇

4

422 ⌇

423

42

420 ⌇

6

416 ⌇

41

414 ⌇

412 ⌇

410

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2203542 A
- US 2008231854 A1
- US 6061130 A